# EUROPEAN PATENT APPLICATION

(11) **EP 2 493 103 A1**
(43) Date of publication of application: **29.08.2012**
(21) Application number: 10832634.9
(22) Date of filing: 19.11.2010
(51) Int. Cl.: H04J 14/08

(54) **RANGING METHOD AND SYSTEM FOR OPTICAL NETWORK UNIT IN PASSIVE OPTICAL NETWORK**

(30) Priority: 24.11.2009 CN 200910221584
(71) Applicant: ZTE Corporation, Shenzhen, Guangdong 518057 (CN)
(72) Inventor: ZHANG, Weiliang, Guangdong 518057 (CN); GENG, Dan, Guangdong 518057 (CN)
(74) Representative: Price, Nigel John King
(86) International application number: PCT/CN2010/078922
(87) International publication number: WO 2011/063727

(57) **Abstract**

The present invention discloses a ranging method for an optical network unit in a passive optical network, which includes: an Optical Line Terminal (OLT) performing ranging for an Optical Network Unit (ONU) in a operation state, updating an Equalization Delay (EqD) of the ONU according to a ranging result, and sending the updated EqD to the ONU; and the ONU implementing an upstream transmission synchronization according to the updated EqD. The present invention further discloses a ranging system for an optical network unit (ONU) in a passive optical network (PON), which includes a ranging device and an equalization delay updating device. In the present invention, the influence on the interruption of services of the ONU for which ranging is performed is reduced, and the time-sensitive services of the ONU for which ranging is performed are protected, thus improving the upstream transmission efficiency of the ONU.

## Description

### Technical Field

The present invention relates to the field of communication technology, and more especially, to a ranging method and system for an Optical Network Unit (ONU) in a Passive Optical Network (PON).

### Background of the Related Art

A Gigabit Passive Optical Network (GPON) technique is an important technical branch in the Passive Optical Network (PON) family, and similar to other PON techniques, GPON is also a kind of passive optical access technique using a point-to-multipoint topology structure.

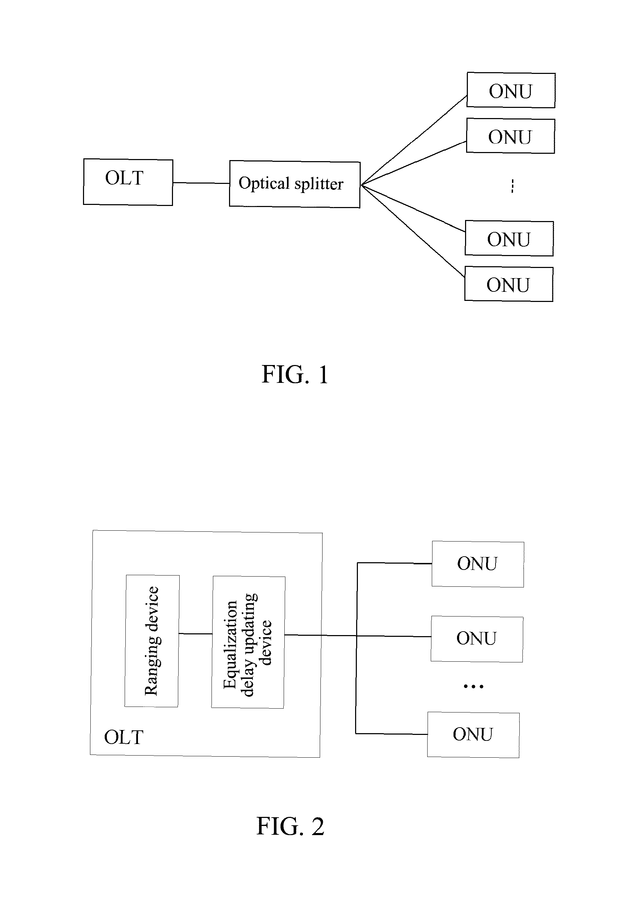

The topology structure of a GPON system is as shown in FIG. 1, which consists of an office side Optical Line Terminal (OLT), a user side Optical Network Unit (ONU) and an Optical Distribution Network (ODN), and it usually uses the point-to-multipoint network structure. The ODN consists of passive optical devices such as single mode fiber, optical splitter and optical connector, and it provides optical transmission medium for physical connection between the OLT and ONU.

In the GPON system, the data transmission in the downlink direction (from the OLT to ONU) adopts a broadcast mode, each ONU respectively receives all the frames, and then acquires the frames belonging to itself according to an ONU-ID, a GPON Encapsulation Method-Port ID (GEM-Port ID) and an Allocation-ID. However, for the data transmission in the upstream direction (from the ONU to OLT), since each ONU needs to share the transmission medium, each ONU should transmit the upstream data within the time slot which is arranged by the OLT to each ONU itself. As the distances from each ONU to the OLT are different, the OLT needs to perform ranging for the ONU in a registration activation stage, so to avoid the upstream data sent by each ONU from arriving at the OLT simultaneously.

In the existing related art for ranging the ONU, the OLT firstly determines the longest distance L from the ONU to the OLT itself supported by the OLT. The OLT measures the value RTDₘₐₓ of Round Trip Delay (RTD) of an ONU in the location of L, and determines the value Teqd of the maximum Equalization Delay (EqD) of all ONUs according to the RTDₘₐₓ. When one ONU accesses a PON system, the ONU is electrified and then enters the registration activation stage, and when the ONU enters the ranging stage of the registration activation stage, the OLT performs ranging for the ONU and measures the RTDᵢ of the ONU, thereby obtaining the value of the Equalization Delay (EqDi) of the ONU (EqDᵢ=Teqd-RTDᵢ). The OLT sends the value of the above EqDi to a corresponding ONU, and the ONU adjusts the clock for sending the data according to the Equalization Delay sent by the OLT to implement the upstream transmission synchronization, and the ONU enters the operation state.

The upstream data sent by the ONU in the operation state should arrive at the OLT at the time arranged by the OLT. The arrival time of the upstream data sent by the ONU will have certain drift due to the effects of ageing, temperature and other factors, and the OLT will update or recalculate the EqD of ONU according to the magnitude of the drift. In the existing technology, the OLT defines two drift thresholds, which are low drift threshold and high drift threshold respectively. When the drift is less than the low drift threshold, this kind of drift will not affect the upstream transmission synchronization, and the value of EqD of the ONU is invariable; when the drift is greater than the low drift threshold and less than the high drift threshold, the OLT updates the EqD of ONU according to the value of the drift and the value of existing EqD of the ONU, and sends the updated EqD to the corresponding ONU, the ONU which receives the EqD adjusts the clock for sending the data to implement the upstream transmission synchronization; when the drift is greater than the high drift threshold, the OLT deactivates the ONU, and the ONU returns to the registration activation state to perform ranging again.

The ONU returning to the registration activation state needs to go through a standby state, a serial number state and a ranging state before returning to the operation state. The inventor of the application of the present invention found that the above process of returning to the registration activation state will cause the ONU service to be interrupted for a period of time, thereby affecting the time-sensitive type of services. No scheme for resolving this problem is provided in the existing related art.

### Summary of the Invention

The technical problem to be solved by the present invention is to provide a ranging method and system for an Optical Network Unit (ONU) in a Passive Optical Network (PON), which resolves the problem that occurrence of lager drift of the time for the upstream data sent by the ONU arriving at the OLT leads to an ONU service interruption.

In order to solve the above problem, the present invention provides a ranging method for an optical network unit in a passive optical network, and the method comprises:
an Optical Line Terminal (OLT) performing ranging for the Optical Network Unit (ONU) in a operation state, updating an Equalization Delay (EqD) of the ONU according to a ranging result, and sending the updated EqD to the ONU; and
the ONU implementing an upstream transmission synchronization according to the updated EqD.

A condition for triggering the OLT to perform ranging for the ONU in the operation state is one of the following conditions or any combination thereof:
condition 1, the OLT performing ranging for the ONU in the operation state regularly;
condition 2, triggering the OLT to perform ranging for the ONU in the operation state when the OLT receives a command sent by a network management system of a Passive Optical Network (PON) system for performing ranging for the ONU in the operation state;
condition 3, triggering the OLT to perform ranging for the ONU in the operation state when the OLT detects that a drift value of an arrival time of upstream transmission data of the ONU exceeds a preset threshold.

The method further comprises,
when detecting that the drift value of the arrival time of upstream data sent by one or more ONUs exceeds the preset threshold, the OLT reporting to the network management system;
the network management system sending to the OLT a command of performing ranging for the ONU exceeding the preset threshold or for all the ONUs in the PON system according to the report of the OLT.

The step of the OLT performing ranging for the ONU in the operation state comprises:
the OLT recording an expected arrival time (Tarrivaltime) of the upstream data sent by the ONU that is assigned to the ONU; and
the OLT recording a time T0 when the upstream data arrive at the OLT practically when receiving the upstream data sent by the ONU, and calculating the updated EqD value of the ONU according to the following formula: EqDnew=EqDold-(T0-Tarrivaltime), wherein, EqDnew is the updated EqD value of the ONU, and EqDold is a pre-updated EqD value of the ONU.

The upstream data comprises:
serial number information which is replied to the OLT as response ranging information after the ONU receives a ranging request sent by the OLT.

The step of the OLT performing ranging for the ONU in the operation state comprises:
the OLT sending a ranging request to the ONU in the operation state, and recording a time T1 of sending the ranging request, and a start time Tstarttime assigned to the ONU for the ONU to send the response ranging information;
the ONU replying the serial number information to the OLT as the response ranging information after receiving the ranging request; and
the OLT recording a time T2 of receiving the serial number information, and calculating the updated EqD value of the ONU according to the following formula: EqDnew=Teqd-(T2-T1-EqDold-Tstarttime), wherein, Teqd is a maximum equalization delay of the PON system, EqDnew is the updated EqD value of the ONU, and EqDold is the pre-updated EqD value of the ONU.

The OLT sends the updated EqD value to the corresponding ONU through a ranging time (Ranging_Time) message.

The method further comprises:
the OLT opening a quiet window for the ONU when performing ranging for the ONU.

In order to solve the above problem, the present invention further provides a ranging system for an Optical Network Unit (ONU) in a passive optical network (PON), and the ranging system comprises a ranging device and an equalization delay updating device, wherein:
the ranging device is configured to: perform ranging for the Optical Network Unit (ONU) in a operation state, and send a ranging result to the equalization delay updating device;
the equalization delay updating device is configured to: update an Equalization Delay (EqD) of the ONU according to the ranging result, and send the updated EqD to the ONU.

The ranging device is further configured to trigger the OLT to perform ranging for the ONU in the operation state according to one of the following conditions or any combination thereof:
triggering ranging for the ONU in the operation state according to a command sent by a network management system of a Passive Optical Network (PON) system for performing ranging for the ONU;
triggering ranging for the ONU in the operation state when detecting that a drift value of an arrival time of upstream transmission data of the ONU exceeds a preset threshold; and performing ranging for the ONU regularly.

The ranging device performs ranging for the ONU in the operation state by using the following approaches: recording an expected arrival time (Tarrivaltime) of the upstream data sent by the ONU that is assigned to the ONU, and when the upstream data sent by the ONU are received, recording a time T0 when the upstream data arrive at the OLT practically; and sending the Tarrivaltime and T0 to the equalization delay updating device as the ranging result;
the equalization delay updating device is configured to: calculate the updated EqD value of the ONU according to the following formula: EqDnew=EqDold-(T0-Tarrivaltime), wherein, EqDnew is the updated EqD value of the ONU, and EqDold is a pre-updated EqD value of the ONU.

The ranging device performs ranging for the ONU in the operation state by using the following approaches: sending a ranging request to the ONU, recording a time T1 of sending the ranging request, and a start time Tstarttime assigned to the ONU for the ONU to send response ranging information; recording a time T2 of receiving serial number information replied by the ONU as the response ranging information; and sending the T1, Tarrivaltime and T2 to the equalization delay updating device as the ranging result;
the equalization delay updating device is configured to calculate the updated EqD value of the ONU according to the following formula: EqDnew=Teqd-(T2-T1-EqDold-Tstarttime), wherein, Teqd is a maximum equalization delay of the PON system, EqDnew is the updated EqD value of the ONU, and EqDold is a pre-updated EqD value of the ONU.

Compared with the existing technology, there are at least the following beneficial effects by using the technical scheme of the present invention:
when the ONU in the operation state of the PON system needs to update the value of EqD, the OLT can perform ranging for the ONU in the operation state, thereby reducing the influence on the interruption of services of the ONU for which ranging is performed, protecting the time-sensitive services of the ONU for which ranging is performed, and improving the upstream transmission efficiency of the ONU.

### Brief Description of Drawings

FIG. 1 is a schematic diagram of the topology structure of the GPON system;
FIG. 2 is a composition schematic diagram of the ranging system for an optical network unit in a passive optical network of the example according to the present invention.

### Preferred Embodiments of the Present Invention

The core of the present invention is that: in the PON system, the OLT can perform ranging for the ONU in the operation state, update the EqD according to the ranging result, and send the updated EqD to the corresponding ONU, and the ONU synchronizes the upstream transmission according to the updated EqD.

With the OLT performing ranging for the ONU in the operation state and updating the EqD in time, the problem that an occurrence of lager drift of the time for the upstream data sent by the ONU arriving at the OLT leads to an ONU service interruption is avoided, which reduces the influence on the interruption of services of the ONU for which ranging is performed, and protects the time-sensitive services of the ONU for which ranging is performed, and improving the upstream transmission efficiency of the ONU.

Specifically, the condition for triggering the OLT to perform ranging for the ONU in the operation state comprises but is not limited to one of the following three conditions or any combination thereof:
Condition 1: the OLT performs ranging for the ONU in the operation state regularly;
Condition 2: the network management system of PON system sends to the OLT a command for performing ranging for parts of or all ONUs in the operation state;
Condition 3: the OLT defines a drift threshold t1, and when detecting that the drift valueΔ t of the arrival time of the ONU upstream transmission data is larger than or equal to t1, the OLT needs to perform ranging for the ONU.

Furthermore, the OLT can perform ranging for the ONU by adopting one of the following approaches:
Approach 1: the OLT calculates out an EqD difference value which the ONU needs to adjust, and calculates out the updated EqD value of the ONU according to the EqD difference value;
Approach 2: the OLT sends a ranging request to the ONU in the operation state, directly performs ranging for the ONU, and calculates the updated EqD value of the ONU according to the ranging result.

Furthermore, in the approach 1, the OLT records the time T0 when the upstream data sent by the ONU practically arrive at the OLT and the time Tarrivaltime when the upstream data sent by the ONU should arrive at the OLT, and calculates the updated EqD value of the ONU according to the following formula: EqDnew=EqDold-(T0-Tarrivaltime), wherein, EqDnew is the updated EqD value of the ONU, and EqDold is the pre-updated EqD value of the ONU.

Furthermore, in the approach 2, the OLT records the time T1 of sending the ranging request, the ONU replies information to the OLT after receiving the ranging request, the OLT records the time T2 of receiving the ONU reply information, and thus, the OLT calculates the updated EqD value of the ONU according to the following formula: EqDnew=Teqd-(T2-T1-EqDold-Tstarttime). Wherein, Teqd is the maximum equalization delay of the PON system, EqDnew is the updated EqD value of the ONU, and EqDold is the pre-updated EqD value of the ONU.

Furthermore, the OLT can open a ranging quiet window for the ONU for which ranging needs to be performed again.

The implementation of the technical scheme of the present invention will be further described in detail with reference to the specific examples below. Unless conflicting, the following multiple examples of the present invention and the characteristics in the examples can be combined mutually and randomly.

### Example 1

In this example, the OLT is triggered to perform ranging for the ONU in the operation state according to the foregoing condition 1, that is, the OLT performs ranging for the ONU in the operation state regularly. After being triggered to perform ranging for the ONU for which ranging needs to be performed again, the OLT performs ranging for the ONU according to the following approach,.

In step 101, the OLT sends a ranging request to the ONU in the operation state, and records the expected arrival time Tarrivaltime assigned to the ONU for sending the response ranging information to the OLT.

In step 102, the ONU replies serial number information to the OLT after receiving the ranging request as the response ranging information.

In step 103, the OLT records the time T0 of the serial number information sent by the ONU arriving at the OLT practically after receiving the serial number information of the ONU, and calculates the updated EqD value of the ONU according to the following formula: EqDnew=EqDold-(T0-Tarrivaltime), wherein, EqDnew is the updated EqD value of the ONU, and EqDold is the pre-updated EqD value of the ONU.

In step 104, the OLT sends the updated EqD value EqDnew which has been calculated out to the ONU through a ranging time message.

In step 105, the ONU updates the local EqD value after receiving the updated EqD value EqDnew, and implements the upstream transmission synchronization.

Description is made in this example by taking the ONU sending serial number information as an example. In other examples of the present invention, ranging for the ONU and update of the EqD value can be performed according to the time T0 when the upstream data sent by the same random ONU practically arrive at the OLT and the time Tarrivaltime when the upstream data sent by the same random ONU should arrive at the OLT.

In addition, in other examples of the present invention, ranging for the ONU in the operation state can be triggered by adopting the foregoing condition 2 or condition 3 or the combination thereof. For example, on the base of the OLT performing ranging regularly, the OLT can be triggered to perform ranging for the ONU when detecting that the drift value of the arrival time of the ONU upstream transmission data is greater than the preset threshold, or when receiving the ranging command of the network management system. Furthermore, in other examples of the present invention, other ranging approaches mentioned above can be also adopted to calculate the updated EqD of the ONU.

### Example 2

In this example, the OLT is triggered to perform ranging for the ONU in the operation state according to the foregoing condition 1, that is, the OLT performs ranging for the ONU in the operation state regularly.

After being triggered to perform ranging for the ONU for which ranging needs to be performed again, the OLT performs ranging for the ONU according to the steps of 101∼105 in the example 1, with the difference from the example 1 being that the OLT needs to open a quiet window for the ONU for which ranging needs to be performed again when sending the ranging request to the ONU in this example.

Wherein, opening the quiet window is used for the ONU for which ranging is to be performed to send a response ranging request message, and the other ONUs can not send the upstream data in the quiet window. The quiet window can avoid a conflict between the message sent by the ONU for which ranging is to be performed for responding the ranging and the upstream date sent by other ONUs.

Certainly, in the other examples of the present invention, ranging for the ONU in the operation state can also be triggered by adopting the foregoing condition 2 or condition 3. Moreover, other ranging approaches mentioned above can be also adopted to calculate the updated EqD of the ONU.

### Example 3

In this example, the OLT is triggered to perform ranging for the ONU in the operation state according to the foregoing condition 3: when the upstream data sent by the ONU in the operation state fail to arrive at the OLT within the time arranged by the OLT, that is, when a certain drift of the arrival time of the upstream data sent by the ONU sending occurs, the OLT calculates the drift value Δt of the arrival time of the upstream transmission data the ONU. The OLT defines a drift threshold t1, and when detecting that the drift value Δt of the arrival time of the ONU upstream transmission data is larger than or equal to t1, the OLT needs to perform ranging for the ONU.

In this example, the OLT performs ranging for the ONU according to the following approach.

In step 201, the OLT sends a ranging request to the ONU, and records the time T1 of sending the ranging request and the start time Tstarttime assigned to the ONU for sending the response ranging information.

In step 202, the ONU replies serial number information to the OLT as the response ranging information at the start time Tstarttime after receiving the ranging request.

In step 203, the OLT records the time T2 of receiving the serial number information of the ONU after receiving the serial number information of the ONU, and calculates the updated EqD value of the ONU according to the following formula: EqDnew=Teqd-(T2-T1-EqDold-Tstarttime), wherein, Teqd is the maximum equalization delay of the PON system, EqDnew is the updated EqD value of the ONU, and EqDold is the pre-updated EqD value of the ONU.

In step 204, the OLT sends the updated EqD value EqDnew to the ONU through a ranging time message.

In step 205, the ONU updates the local EqD value after receiving the updated EqD value EqDnew, and implements the upstream transmission synchronization.

In other examples of the present invention, ranging for the ONU in the operation state can also be triggered by adopting the foregoing condition 1 or condition 2. Moreover, other ranging approaches mentioned above can be also adopted to calculate the updated EqD of the ONU.

### Example 4

In this example, the OLT is triggered to perform ranging for the ONU in the operation state according to the foregoing condition 2.

When receiving a report from the OLT that the drift value of the arrival time of the upstream data of one or more ONUs is larger than the drift threshold t1 defined by the OLT, the network management system sends to the OLT a command for performs ranging for parts of or all ONUs in the operation state.

After receiving the command for performing ranging for the ONU in the operation state, the OLT can perform ranging for the ONU according to the steps of 101∼105 in the example 1, and also can perform ranging for the ONU according to the steps of 201∼205 in the example 3, with the difference of this example being that the OLT needs to open a quiet window for the ONU for which ranging needs to be performed again when sending the ranging request to the ONU.

Certainly, in other examples of the present invention, the OLT can also be triggered to perform ranging for the ONU in the operation state by adopting the foregoing condition 1 or condition 3.

As shown in FIG. 2, the example of the present invention further provides a ranging system for an optical network unit in a passive optical network, which can be applied in the OLT, and the ranging system comprises a ranging device and an equalization delay updating device, wherein:
the ranging device is configured to: perform ranging for the Optical Network Unit (ONU) in the operation state, and send a ranging result to the equalization delay updating device;
the equalization delay updating device is configured to: update the Equalization Delay (EqD) of the ONU according to the ranging result, and send the updated EqD to the ONU.

Wherein, the ranging device is further configured to: trigger the OLT to perform ranging for the ONU in the operation state according to one of the following conditions or any combination thereof:
ranging is triggered to perform for the ONU in the operation state according to a command sent by a network management system of a Passive Optical Network (PON) system for performing ranging for the ONU in the operation state;
ranging is triggered to perform for the ONU in the operation state when detecting that the drift value of the arrival time of the ONU upstream transmission data exceeds the preset threshold; and
ranging is performed for the ONU in the operation state regularly.

Furthermore, the ranging device performs ranging for the ONU in the operation state by adopting the following approach: recording the expected arrival time of the upstream data sent by the ONU that is assigned by the OLT to the ONU, and when receiving the upstream data sent by the ONU, recording the time T0 of the upstream data arriving at the OLT practically; and sending the Tarrivaltime and T0 to the equalization delay updating device as the ranging result;
the equalization delay updating device is configured to: calculate the updated EqD value of the ONU according to the following formula: EqDnew=EqDold-(T0-Tarrivaltime), wherein, EqDnew is the updated EqD value of the ONU, and EqDold is the pre-updated EqD value of the ONU.

Furthermore, the ranging device performs ranging for the ONU in the operation state by adopting the following approach: sending a ranging request to the ONU, recording the time T1 of sending the ranging request, assigning the start time Tstarttime to the ONU for sending the response ranging information; and recording the time T2 of receiving the serial number information replied by the ONU as the response ranging information,; and sending the T1, Tarrivaltime and T2 to the equalization delay updating device as the ranging result;
the equalization delay updating device is configured to: calculate the updated EqD value of the ONU according to the following formula: EqDnew=Teqd-(T2-T1-EqDold-Tstarttime), wherein, Teqd is the maximum equalization delay of the PON system, EqDnew is the updated EqD value of the ONU, and EqDold is the pre-updated EqD value of the ONU.

The ordinary person skilled in the art can understand that all or part of the steps in the above method can be completed through a program instructing the related hardware, and the program can be stored in a computer readable memory medium, such as a read-only memory, disk or optical disk and so on. Alternatively, all or part of the steps of the above examples also can be implemented by using one or more integrated circuits. Correspondingly, each module/unit in the above examples can be implemented in a form of hardware, and also can be implemented in a form of software function module. The present invention is not limited to any combination of hardware and software with a specific form.

The above description is only the preferred examples of the present invention and are not used to limit the protection scope of the present invention. The present invention also can have other various examples, and the person skilled in the art can make corresponding equivalent changes or substitutions according to the technical scheme of the present invention and the conception of the technical scheme without departing from the spirit and essence of the present invention. These corresponding changes or substitutions, however, shall all fall into the protection scope of the claims appended to the present invention.

### Industrial Applicability

In the technical scheme of the present invention, when the ONU in the operation state of the PON system needs to update the value of EqD, the OLT can perform ranging for the ONU in the operation state, thereby reducing the influence on the interruption of services of the ONU for which ranging is performed, protecting the time-sensitive services of the ONU for which ranging is performed, and improving the upstream transmission efficiency of the ONU.

## Claims

1. A ranging method for an optical network unit in a passive optical network, comprising:
an Optical Line Terminal (OLT) performing ranging for the Optical Network Unit (ONU) in a operation state, updating an Equalization Delay (EqD) of the ONU according to a ranging result, and sending the updated EqD to the ONU; and
the ONU implementing an upstream transmission synchronization according to the updated EqD.

2. The method of claim 1, wherein,
a condition for triggering the OLT to perform ranging for the ONU in the operation state is one of the following conditions or any combination thereof:
condition one, the OLT performing ranging for the ONU in the operation state regularly;
condition two, triggering the OLT to perform ranging for the ONU in the operation state when the OLT receives a command for performing ranging for the ONU in the operation state sent by a network management system of a Passive Optical Network (PON) system;
condition three, triggering the OLT to perform ranging for the ONU in the operation state when the OLT detects that a drift value of an arrival time of upstream transmission data of the ONU exceeds a preset threshold.

3. The method of claim 2, wherein, further comprising,
when detecting that the drift value of the arrival time of upstream data sent by one or more ONUs exceeds the preset threshold, the OLT reporting to the network management system;
the network management system sending to the OLT a command of performing ranging for the ONU exceeding the preset threshold or for all the ONUs in the PON system according to the report of the OLT.

4. The method of claim 1, wherein, the step of the OLT performing ranging for the ONU in the operation state comprises:
the OLT recording an expected arrival time (Tarrivaltime) assigned to the upstream data sent by the ONU; and
the OLT recording a time T0 when the upstream data arrive at the OLT practically when receiving the upstream data sent by the ONU, and calculating the updated EqD value of the ONU according to the following formula: EqDnew=EqDold-(T0-Tarrivaltime), wherein, EqDnew is the updated EqD value of the ONU, and EqDold is a pre-updated EqD value of the ONU.

5. The method of claim 4, wherein, the upstream data comprises:
serial number information which is replied to the OLT as response ranging information after the ONU receives a ranging request sent by the OLT.

6. The method of claim 1, wherein, the step of the OLT performing ranging for the ONU in the operation state comprises:
the OLT sending a ranging request to the ONU in the operation state, and recording a time T1 of sending the ranging request, and a start time Tstarttime assigned to the ONU for the ONU to send the response ranging information;
the ONU replying a serial number information to the OLT as the response ranging information after receiving the ranging request; and
the OLT recording a time T2 of receiving the serial number information, and calculating the updated EqD value of the ONU according to the following formula: EqDnew=Teqd-(T2-T1-EqDold-Tstarttime), wherein, Teqd is a maximum equalization delay of the PON system, EqDnew is the updated EqD value of the ONU, and EqDold is a pre-updated EqD value of the ONU.

7. The method of any one of claims 1 to 6, wherein,
the OLT sends the updated EqD value to the corresponding ONU through a ranging time (Ranging_Time) message.

8. The method of any one of claims 1 to 6, wherein, further comprising:
the OLT opening a quiet window for the ONU when performing ranging for the ONU.

9. A ranging system for an Optical Network Unit (ONU) in a passive optical network (PON), and the ranging system comprising a ranging device and an equalization delay updating device, wherein:
the ranging device is configured to: perform ranging for the Optical Network Unit (ONU) in a operation state, and send a ranging result to the equalization delay updating device;
the equalization delay updating device is configured to: update an Equalization Delay (EqD) of the ONU according to the ranging result, and send the updated EqD to the ONU.

10. The system according to claim 9, wherein,
the ranging device is further configured to trigger the OLT to perform ranging for the ONU in the operation state according to one of the following conditions or any combination thereof:
triggering ranging for the ONU in the operation state according to a command for performing ranging for the ONU sent by a network management system of a Passive Optical Network (PON) system;
triggering ranging for the ONU in the operation state when detecting that a drift value of an arrival time of upstream transmission data of the ONU exceeds a preset threshold; and
performing ranging for the ONU regularly.

11. The system according to claim 9 or 10, wherein,
the ranging device performs ranging for the ONU in the operation state by using the following approaches: recording an expected arrival time (Tarrivaltime) assigned to the upstream data sent by the ONU, and when the upstream data sent by the ONU are received, recording a time T0 when the upstream data arrive at the OLT practically; and sending the Tarrivaltime and T0 to the equalization delay updating device as the ranging result;
the equalization delay updating device is configured to: calculate the updated EqD value of the ONU according to the following formula: EqDnew=EqDold-(T0-Tarrivaltime), wherein, EqDnew is the updated EqD value of the ONU, and EqDold is a pre-updated EqD value of the ONU.

12. The system according to claim 9 or 10, wherein,
the ranging device performs ranging for the ONU in the operation state by using the following approach: sending a ranging request to the ONU, recording a time T1 of sending the ranging request and a start time Tstarttime assigned to the ONU for the ONU to send response ranging information; recording a time T2 of receiving serial number information replied by the ONU as the response ranging information; and sending the T1, Tarrivaltime and T2 to the equalization delay updating device as the ranging result;
the equalization delay updating device is configured to calculate the updated EqD value of the ONU according to the following formula: EqDnew=Teqd-(T2-T1-EqDold-Tstarttime), wherein, Teqd is a maximum equalization delay of the PON system, EqDnew is the updated EqD value of the ONU, and EqDold is a pre-updated EqD value of the ONU.
